# EUROPÄISCHE PATENTSCHRIFT

(11) **EP 3 275 705 B1**
(45) Veröffentlichungstag und Bekanntmachung des Hinweises auf die Patenterteilung: **12.02.2020**
(21) Anmeldenummer: 17180294.5
(22) Anmeldetag: 07.07.2017
(51) Int. Cl.: B60G 99/00, B62D 33/06, B60G 17/06

(54) **VERFAHREN UND VORRICHTUNG ZUR STEUERUNG ODER REGELUNG EINER FAHRERHAUS-LAGERUNG**
METHOD AND DEVICE FOR CONTROLLING OR REGULATING A DRIVER'S CAB SUSPENSION
PROCÉDÉ ET DISPOSITIF DE COMMANDE OU RÉGLAGE DE SUSPENSION DE CABINE DE CONDUCTEUR

(30) Priorität: 26.07.2016 DE 102016009081
(43) Veröffentlichungstag der Anmeldung: 31.01.2018
(73) Patentinhaber: MAN Truck & Bus SE, 80995 München (DE)
(72) Erfinder: Wagner, Philipp, 86316 Friedberg (DE); Fleischhacker, Jan, 82140 Olching (DE); Kohrs, Christian, 73207 Plochingen (DE)
(74) Vertreter: v. Bezold & Partner Patentanwälte - PartG mbB

(56) Entgegenhaltungen:
- WO-A1-2016/197068
- DE-A1-102013 204 024
- DE-A1-102015 217 481
- US-A1- 2008 319 609
- US-A1- 2013 218 414
- US-B1- 8 935 034

## Beschreibung

Die Erfindung betrifft Verfahren und eine Vorrichtung zur Steuerung oder Regelung einer Fahrerhaus-Lagerung eines Kraftfahrzeugs, insbesondere eines Nutzfahrzeugs, das in einem autonomen und/oder teil-autonomen Fahrmodus betreibbar ist.

Bei der Auslegung von Fahrwerkregelsystemen ist stets ein Kompromiss notwendig zwischen Komfort und Fahrsicherheit. Ein ideales Fahrwerk soll die durch Fahrbahnunebenheiten angeregten Schwingungen möglichst gut dämpfen und gleichzeitig die Radaufstandskräfte möglichst konstant auf einem vorgegebenen Wert halten, weil hierdurch die Räder das höchste Längs- und Seitenführungspotential haben, und das Fahrzeug mit optimaler Sicherheit führen.

Die gegenwärtig vorhandenen Dämpfersysteme in Fahrzeugen sind in drei Gruppen einteilbar: passive, semiaktive und aktive Dämpfersysteme. Bei passiven Dämpfersystemen sind die Größe und die Richtung der von dem Dämpfer ausgeübten Kraft in der Regel nur abhängig von der relativen Geschwindigkeit des Dämpfers. Es sind jedoch auch positionsabhängige Dämpfer bekannt, z. B. sog. Nutdämpfer. In passiven Dämpfersystemen ist eine Veränderung der Dämpferkraftkennlinie während des Fahrbetriebes nicht vorgesehen. Die Abstimmung eines Fahrzeugs mit passiven Stoßdämpfern stellt immer nur einen Kompromiss dar, da unterschiedliche Fahrzustände mit derselben Fahrwerkseinstellung abgedeckt werden müssen.

Eine Lösung für diesen Zielkonflikt besteht im Einsatz semiaktiver Stoßdämpfer, die es ermöglichen, die Dämpferkennlinien über einen weiten Bereich per elektronischer Ansteuerung zu verändern und damit für unterschiedliche Fahrsituationen innerhalb weniger Millisekunden eine optimale Dämpfereinstellung bereitzustellen. Aber auch für unterschiedliche Beladungszustände, die insbesondere im Nutzfahrzeug große Unterschiede bezüglich Gesamtmasse und Schwerpunktslage bewirken können, können geeignete Dämpfervoreinstellungen gewählt werden, die einer einzigen Abstimmung passiver Dämpfer überlegen sind.

Bei semiaktiven Dämpfersystemen kann deren Kennlinie während der Fahrt schnell und über einen weiten Bereich verändert werden. Insbesondere können solche Stoßdämpfer auf (proportionalen) Verstellventilen beruhen, die den Ölfluss verändern, oder auf magneto- oder elektrorheologischen Flüssigkeiten, wobei ein magnetisches oder elektrisches Feld die Viskosität der Flüssigkeit und damit die Dämpfkraft beeinflusst. Es sind auch Kombinationen der Technologien aus der Praxis bekannt. Auf diese Art und Weise können verschiedene Regelungsprogramme mittels eines Stellelementes in Abhängigkeit von der aktuellen Fahrsituation die optimale Dämpferkraft einstellen.

Bei aktiven Dämpfersystemen wird über einen Aktuator die gewünschte Kraft in jeglicher Richtung bereitgestellt, unabhängig von der relativen Geschwindigkeit des Dämpfers.

Die vorgenannten Dämpfersysteme sind nicht nur zur Fahrwerkslagerung, sondern auch zur dämpfenden Lagerung eines Fahrerhauses (auch als Fahrerkabine bezeichnet) bekannt. Gattungsgemäße Fahrerhauslagerungen, d. h. Aufhängungseinrichtungen zur federnden/dämpfenden Aufhängung einer Fahrerkabine eines Kraftfahrzeugs relativ zum Fahrzeugchassis, kommen beispielsweise, jedoch keineswegs ausschließlich, bei Lastkraftwagen, landwirtschaftlichen Fahrzeugen oder Schwerlastfahrzeugen zum Einsatz. Beispielhafte Fahrerhauslagerungen sind beispielsweise aus den Offenlegungsschriften DE 10 2008 063 475 A1, DE 10 2013 204 024 A1 oder DE 10 2012 200 670 A1 bekannt.

Während im Fahrwerk sowohl der Fahrkomfort im Sinne von Reduktion der Aufbauschwingungen als auch die Fahrsicherheit im Sinne von gleichmäßigen Radaufstandskräften über semiaktive oder aktive Elemente beeinflusst werden kann, kann im Bereich der Fahrerhauslagerung nur ein Einfluss auf die Fahrerhausschwingungen und damit den Komfort genommen werden. Durch die direkte Wirkung ist der Einfluss aber größer als der der Fahrwerksdämpfung.

Aufgrund der federnden Lagerung des Fahrerhauses auf dem Fahrgestellrahmen kommt es beim Bremsen bzw. beim Beschleunigen des Fahrzeugs zu einer unerwünschten Nickbewegung in bzw. entgegen der Fahrtrichtung. Des Weiteren kommt es bei Kurvenfahrten zu nachteiligen Wankbewegungen des Fahrerhauses zum Kurvenäußeren hin. Der Grund ist im relativ hohen Schwerpunkt des Fahrerhauses auf dem Fahrgestellrahmen zu sehen. Derartige ungewollte Bewegungsfreiheitsgrade wie Nick- oder Wankbewegungen können über verstellbare, z. B. semiaktive, Dämpfer gezielt und wirksam bedämpft werden. Insbesondere auf Längsbeschleunigungen reagieren Fahrerhäuser aufgrund der verhältnismäßig geringen Länge und der damit verbunden kurzen Lagerbasis mit deutlichen Nickbewegungen.

Aus der Praxis sind Fahrerhauslagerungen von Nutzfahrzeugen bekannt, deren Dämpfung an unterschiedliche Fahrsituationen angepasst werden kann. So ist beispielsweise bekannt, die Dämpferkraft der verstellbaren Dämpfer der Fahrerhauslagerung aus Komfortgründen auf eine weiche Dämpfung einzustellen, die aber bei dynamischen Vorgängen wie Spurwechseln, Brems- oder Schaltvorgängen die Dämpfkraft steigert.

Aus dem Stand der Technik sind ferner Kraftfahrzeuge bekannt, die in einem autonomen oder teil-autonomen Fahrmodus betreibbar sind, in welchem das Kraftfahrzeug mithilfe eines Fahrerassistenzsystems selbsttätig sowohl eine Längsführung als auch eine Querführung des Kraftfahrzeugs umfassende Fahrzeugführung durchführt.

Aus der Offenlegungsschrift DE 10 2013 019 141 A1 ist beispielsweise ein Verfahren zum Betreiben eines Fahrerassistenzsystems eines Kraftfahrzeugs bekannt, wobei das Fahrerassistenzsystem in einem autonomen Fahrmodus selbsttätig eine sowohl eine Längsführung als auch eine Querführung des Kraftfahrzeugs umfassende Fahrzeugführung durchführt und dabei ein Wechselsignal empfängt, welches dazu ausgelegt ist, bei dem Fahrerassistenzsystem einen Wechsel von dem autonomen Fahrmodus in einen vorbestimmten anderen Fahrmodus anzustoßen, in welchem bestimmungsgemäß ein Fahrer des Kraftfahrzeugs zumindest einen Teil der Fahrzeugführung durchführt.

Aus der Offenlegungsschrift DE 10 2015 214 025 A1 ist beispielsweise ein Verfahren zum Betreiben eines Kraftfahrzeuges, welches in einem autonomen Fahrmodus betrieben wird, bekannt, wobei nach dem Einschalten des autonomen Fahrmodus eine verbrauchsreduzierende und/oder verschleißreduzierende Fahrstrategie des Kraftfahrzeuges eingestellt wird.

Aus der Offenlegungsschrift DE 10 2009 010 006 A1 ist ferner ein Verfahren zum teilautonomen oder autonomen Fahren eines Kraftfahrzeugs mittels eines Fahrerassistenzsystems bekannt. Hierbei werden mittels einer Umfeldsensorik Daten des Umfelds des Kraftfahrzeugs bestimmt. Aus den Umfelddaten wird dann eine Fahrstrategie zum teilautonomen oder autonomen Fahren bestimmt, wobei das Fahrerassistenzsystem diejenigen Fahrfunktionen des Fahrers des Fahrzeugs übernimmt, falls festgestellt wird, dass der Fahrer die Fahrfunktionen an das Fahrerassistenzsystem übergeben will, wobei ein Fahrereingriff in das Fahrgeschehen während der teilautonomen oder autonomen Fahrt das Fahrerassistenzsystem übersteuert.

Aus der Offenlegungsschrift US 2013/0218414 A1 ist ferner auch ein Verfahren zum Einstellen der räumlichen Position der Rollachse eines Kraftfahrzeugs, das über ein aktives Fahrwerk verfügt, bekannt. Dabei kann das Kraftfahrzeug aktiv so in eine gefahrene Kurve gekippt werden, dass unangenehme Querbeschleunigungen, die ansonsten auf die Insassen einwirken würden, kompensiert werden. Gerade in einem vollautomatischen Fahrmodus, in dem das subjektive Empfinden von Querbeschleunigungen nicht mehr erforderlich ist, können durch die Verschiebung der räumlichen Position der Rollachse die auf einen Fahrzeuginsassen einwirkenden Querbeschleunigungen besonders effektiv minimiert werden. Nachteilig an dieser Überkompensation der Fahrzeugneigung ist allerdings, dass diese bei empfindlichen Passagieren auch Übelkeit auslösen kann.

Das Dokument US 8 935 034 B1 offenbart ein autonom steuerbares Fahrzeug, welches ausgebildet ist, eine Verhaltensanalyse an mobilen Objekten in der Nähe des autonomen Fahrzeugs durchzuführen. Insbesondere ist das autonome Fahrzeug in der Lage, nahe gelegene Fahrzeuge zu erkennen, zu verfolgen und zu bestimmen, wann diese nahe gelegenen Fahrzeuge bestimmte Aktionen durchgeführt haben, indem es deren Bewegungen mit Kartendaten vergleicht. Um Energie zu sparen sowie den Komfort für die Insassen zu verbessern, kann weiterhin die Dämpfungscharakteristik des dort offenbarten Fahrzeugs variiert werden, je nachdem, ob das Fahrzeug aktuell von einem Fahrer gelenkt wird oder in einem autonomen Modus betrieben wird. WO2016/197068, das unter Art. 54(3) EPÜ fällt, offenbart ebenfalls ein autonom steuerbares Fahrzeug.

Im Hinblick auf die zunehmende Bedeutung von autonom betreibbaren Fahrzeugen ist es eine Aufgabe der Erfindung, die bekannten Verfahren und Vorrichtungen zur Anpassung der Dämpferkraft verstellbarer Dämpfer einer Fahrerhaus-Lagerung eines Kraftfahrzeugs im Hinblick für einen Einsatz in einem Fahrzeug weiterzubilden, das sowohl aktiv vom Fahrer steuerbar ist als auch in einem autonomen und/oder teil-autonomen Fahrmodus betreibbar ist.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß den Ansprüchen wird ein Verfahren zur Steuerung oder Regelung einer Fahrerhaus-Lagerung eines Kraftfahrzeugs bereitgestellt, wobei die Fahrerhauslagerung in ihrer Dämpferkraft verstellbare Dämpfer aufweist. Die Fahrerhauslagerung kann insbesondere eine Aufhängungseinrichtung zur dämpfenden und vorzugsweise auch federnden Aufhängung des Fahrerhauses (Fahrerkabine) eines Kraftfahrzeugs relativ zum Fahrzeugchassis aufweisen. Das Fahrzeugchassis kann ein Fahrzeugrahmen bzw. Leiterrahmen sein.

Das Kraftfahrzeug ist hierbei in einem autonomen oder teil-autonomen ersten Fahrmodus betreibbar, in welchem das Kraftfahrzeug mithilfe eines Fahrerassistenzsystems selbsttätig sowohl eine Längsführung als auch eine Querführung des Kraftfahrzeugs umfassende Fahrzeugführung durchführt. Im ersten Fahrmodus übernimmt das Fahrerassistenzsystem zum autonomen Fahren die für die Längsführung und Querführung des Kraftfahrzeugs erforderlichen Fahrfunktionen, z. B. das Lenken, Beschleunigen, Bremsen oder gegebenenfalls die Gangwahl, d. h., das Fahrerassistenzsystem ist zum automatischen Fahren durch Eingreifen in die Motorsteuerung, in ein Getriebe und eine Bremsanlage des Nutzfahrzeugs ausgebildet. Derartige Fahrerassistenzsysteme sind an sich aus dem Stand der Technik bekannt und daher vorliegend nicht näher beschrieben.

Das Kraftfahrzeug ist ferner in einem zweiten Fahrmodus durch den Fahrer steuerbar betreibbar, in welchem ein Fahrer des Kraftfahrzeugs zumindest einen Teil der Fahrzeugführung selbst durchführen soll. Im ersten Fahrmodus fährt das Fahrzeug somit (teil-)autonom und im zweiten Fahrmodus fährt der Fahrer aktiv das Fahrzeug.

Das Kraftfahrzeug kann insbesondere ein Nutzfahrzeug, z. B. ein Lastkraftwagen (LKW) sein. Die verstellbaren Dämpfer können als semi-aktive oder aktive Dämpfer ausgebildet sein. Die verstellbaren Dämpfer können ferner als verstellbare Feder-Dämpfer-Einrichtungen ausgeführt sein. Hierbei können die dämpfenden und federnden Elemente baulich getrennt voneinander ausgeführt sein oder als kombinierte Feder-Dämpfer-Elemente, z. B. eine verstellbare Luftfeder mit integriertem Dämpfer, ausgeführt sein.

Gemäß den Ansprüchen werden die genannten Aufgaben dadurch gelöst, dass, falls das Kraftfahrzeug in dem ersten Fahrmodus betrieben wird, die verstellbaren Dämpfer der Fahrerhaus-Lagerung so angesteuert oder geregelt werden, dass Nick- und/oder Wankbewegungen im Vergleich zum zweiten Fahrmodus reduziert sind. Würde somit das Fahrzeug zweimal hintereinander die gleiche Fahrtstrecke mit dem gleichen Geschwindigkeits- und Beschleunigungsverhalten durchfahren, und zwar einmal im (teil-) autonomen ersten Fahrmodus und einmal im aktiven zweiten Fahrmodus, dann wären die Nick- und oder Wankbewegungen beim Durchfahren dieser Fahrstrecke im ersten Fahrmodus geringer als beim Durchfahren im zweiten Fahrmodus.

Steuer- und Regelverfahren zur Reduktion und/oder Kompensation von Wankbewegungen und Nickbewegungen sind an sich aus dem Stand der Technik bekannt und müssen hier nicht näher beschrieben werden. Entscheidend ist, dass erfindungsgemäß die Regelung oder Steuerung der verstellbaren Dämpfer im ersten Fahrmodus so durchgeführt wird, dass Nick- und/oder Wankbewegungen stärker unterdrückt werden als im zweiten Fahrmodus. Auf diese Weise wird für teilautonome oder autonome Fahrsituationen eine möglichst komfortable Dämpfung der Fahrerhauslagerung realisiert, die den Fahrer vom Einfluss der Fahrbewegungen weitgehend abkoppelt. Dadurch soll beispielsweise ein Komfort erzielt werden, wie er aus modernen Zügen bekannt ist. Nebentätigkeiten des Fahrers, die er im ersten Fahrmodus durchführt, zum Beispiel Lesen, Bürotätigkeiten etc., werden mit reduzierter minimaler Stimulation von außerhalb und möglichst ermüdungsfrei möglich.

Gemäß einer besonders bevorzugten Ausführungsform wird, falls das Kraftfahrzeug in dem ersten Fahrmodus betrieben wird, eine bei einer Längsbeschleunigung des Fahrzeugs von einem Insassen des Fahrerhauses wahrnehmbare Längsbeschleunigung zumindest zum Teil dadurch reduziert, dass bei einer Längsbeschleunigung des Fahrzeugs das Fahrerhaus mittels der Fahrerhauslagerung, z. b. mittels der Dämpfer und/oder mittels der Federelemente der Fahrerhauslagerung, nach vorne geneigt wird und bei einer Längsverzögerung nach hinten geneigt wird. Bei dieser Ausführungsform weist die Fahrerhauslagerung aktive Dämpfer auf, deren Ausfahrhöhe einstellbar ist.

Unter einer Neigung nach vorne wird eine Kippbewegung des Fahrerhauses verstanden, bei der die in Fahrtrichtung gesehene Vorderseite des Fahrerhauses im Vergleich zur hinteren Seite des Fahrerhauses nach unten verkippt wird, sodass das vordere Ende des Fahrerhauses bei der Längsbeschleunigung tiefer als das hintere Ende des Fahrerhauses liegt. Unter einer Neigung nach hinten wird die umgekehrte Kippbewegung des Fahrerhauses verstanden, bei der die in Fahrtrichtung gesehene hintere Seite des Fahrerhauses im Vergleich zur Vorderseite des Fahrerhauses nach unten verkippt ist.

Dieses Prinzip ist auch als sogenanntes Motion Cueing" aus dem Bereich der Bewegungssimulatoren bekannt, um die von einem Probanden wahrnehmbare Beschleunigung zu beeinflussen.

Diese Ausführungsform bietet den besonderen Vorzug, dass der Komfort für den Fahrer während eines Betriebs des Fahrzeugs im ersten Fahrmodus noch weiter erhöht wird, da die Wahrnehmung von Längsbeschleunigungen, die das Fahrzeug durchführt, signifikant reduziert werden können.

Eine Möglichkeit der erfindungsgemäßen Realisierung sieht ferner vor, dass, falls das Kraftfahrzeug in dem ersten Fahrmodus betrieben wird, eine bei einer Querbeschleunigung des Fahrzeugs von einem Insassen des Fahrerhauses wahrnehmbare Querbeschleunigung zumindest zum Teil dadurch reduziert wird, dass bei einer Querbeschleunigung des Fahrzeugs das Fahrerhaus mittels der Fahrerhauslagerung zur Seite geneigt wird. Beispielsweise kann bei einer Querbeschleunigung in Fahrtrichtung nach rechts die rechte Seite des Fahrerhauses im Vergleich zur linken Seite nach unten geneigt werden. Ebenso kann bei einer Querbeschleunigung in Fahrtrichtung nach links die rechte Seite der Fahrerkabine im Vergleich zur linken Seite nach oben geneigt werden. Bei dieser Ausführungsform weist die Fahrerhauslagerung aktive Dämpfer auf und/oder in der Höhe verstellbare Federelemente. Diese Ausführungsform bietet somit den Vorteil, dass Querbeschleunigungen bzw. Seitenbeschleunigungen durch Insassen des Fahrerhauses nicht mehr wahrgenommen werden oder zumindest nur noch reduziert wahrgenommen werden, was den Komfort innerhalb des Fahrerhauses weiter erhöht.

Eine weitere Möglichkeit der erfindungsgemäßen Realisierung sieht ferner vor, dass, falls das Kraftfahrzeug in dem ersten Fahrmodus betrieben wird, eine bei einer Bergauffahrt erzeugte Neigung des Fahrerhauses des Kraftfahrzeugs nach hinten zumindest zum Teil dadurch reduziert wird, dass das Fahrerhaus mittels der Fahrerhauslagerung nach vorne geneigt wird. Mit anderen Worten wird eine durch eine Fahrbahnsteigung erzeugte Neigung des Fahrerhauses nach hinten durch eine entsprechende Gegenneigung kompensiert, wobei die Gegenneigung durch die Fahrerhauslagerung erzeugt wird, z. B. durch entsprechendes Höhenverstellen der Feder-Dämpfer-Elemente der Fahrerhauslagerung. Hierzu können beispielsweise die hinteren Dämpfer- und/oder Federelemente der Fahrerhauslagerung ausgefahren werden und/oder die vorderen Dämpfer- und/oder Federelemente der Fahrerhauslagerung eingefahren werden.

Analog kann, falls das Kraftfahrzeug in dem ersten Fahrmodus betrieben wird, eine bei einer Bergabfahrt erzeugte Neigung des Kraftfahrzeugs nach vorne zumindest zum Teil dadurch reduziert werden, dass das Fahrerhaus mittels der Fahrerhauslagerung nach hinten geneigt wird.

Gemäß den unabhängigen Ansprüchen erfolgt eine Regelung der Dämpferkraft der verstellbaren Dämpfer der Fahrerhauslagerung nach dem Skyhook-Verfahren, während eine Regelung einer Dämpferkraft eines verstellbaren Dämpfers einer Fahrwerkslagerung des Kraftfahrzeugs nach dem Groundhook-Verfahren erfolgt. Das Skyhook-Verfahren und das Groundhook-Verfahren sind als Regelalgorithmen zur Regelung von verstellbaren Dämpfern aus dem Stand der Technik wohlbekannt und müssen hier nicht näher beschrieben werden. Die Verwendung des Skyhook-Verfahrens für die Fahrerhauslagerung bei gleichzeitiger Verwendung des Groundhook-Verfahrens für die Fahrwerkslagerung bietet ein besonders gutes Zusammenspiel aus Komfort für die Fahrerhauslagerung bei gleichzeitiger sicherheitsorientierter Regelung des Fahrwerks.

Gemäß einem zweiten Gesichtspunkt der Erfindung wird ferner eine Steuervorrichtung zur Anpassung der Dämpferkraft verstellbarer Dämpfer einer Fahrerhaus-Lagerung eines Kraftfahrzeugs, insbesondere eines Nutzfahrzeugs, bereitgestellt. Hierbei ist die Steuervorrichtung ausgebildet, ein Verfahren wie im unabhängigen Anspruch 5 beschrieben, durchzuführen.

Insbesondere ist die Steuervorrichtung ausgebildet, zu erfassen, ob das Kraftfahrzeug in einem autonomen oder teil-autonomen ersten Fahrmodus betrieben wird, in welchem das Kraftfahrzeug mithilfe eines Fahrerassistenzsystems selbsttätig sowohl eine Längsführung als auch eine Querführung des Kraftfahrzeugs umfassende Fahrzeugführung durchführt oder in einem zweiten Fahrmodus betrieben wird, in welchem ein Fahrer des Kraftfahrzeugs zumindest einen Teil der Fahrzeugführung selbst durchführt. Die Steuervorrichtung ist ferner ausgebildet, die verstellbaren Dämpfer der Fahrerhaus-Lagerung so anzusteuern oder zu regeln, dass Nick- und/oder Wankbewegungen im Vergleich zum zweiten Fahrmodus reduziert werden, falls das Kraftfahrzeug in dem ersten Fahrmodus betrieben wird.

Zur Vermeidung von Wiederholungen sollen rein verfahrensgemäß offenbarte Merkmale auch als vorrichtungsgemäß offenbart gelten und beanspruchbar sein und umgekehrt. Die vorgenannten Aspekte und erfindungsgemäßen Merkmale, insbesondere im Hinblick auf Neigung des Fahrerhauses zur Reduktion von wahrnehmbaren Längs- und/oder Querbeschleunigungen im Fahrerhaus, gelten somit auch für die Steuervorrichtung.

Die Erfindung betrifft ferner ein Kraftfahrzeug, insbesondere Nutzfahrzeug, mit einer solchen Steuervorrichtung. Das Kraftfahrzeug umfasst ferner ein Fahrerhaus und eine verstellbare Dämpfer aufweisende Fahrerhauslagerung. Das Kraftfahrzeug umfasst ferner ein Fahrerassistenzsystem, mittels dessen das Kraftfahrzeug in einem autonomen oder teil-autonomen ersten Fahrmodus betreibbar ist, in welchem das Kraftfahrzeug mithilfe des Fahrerassistenzsystems selbsttätig sowohl eine Längsführung als auch eine Querführung des Kraftfahrzeugs umfassende Fahrzeugführung durchführt. Das Kraftfahrzeug ist ferner in einem zweiten Fahrmodus durch den Fahrer selbst steuerbar betreibbar, in welchem ein Fahrer des Kraftfahrzeugs zumindest einen Teil der Fahrzeugführung selbst aktiv durchführen soll.

Weitere Einzelheiten und Vorteile der Erfindung werden im Folgenden unter Bezug auf die beigefügten Zeichnungen beschrieben. Es zeigen:
- Figur 1: ein schematisches Ablaufdiagramm zur Illustration eines bekannten Regelverfahrens verstellbarer Dämpfer einer Fahrerhauslagerung;
- Figur 2: ein schematisches Ablaufdiagramm zur Illustration eines Verfahrens zur Anpassung der Dämpferkraft verstellbarer Dämpfer einer Fahrerhaus-Lagerung gemäß einem Ausführungsbeispiel der Erfindung;
- Figur 3: ein schematisches Ablaufdiagramm zur Illustration eines Verfahrens zur Anpassung der Dämpferkraft verstellbarer Dämpfer einer Fahrerhaus-Lagerung gemäß einem Ausführungsbeispiel der Erfindung; und
- Figuren 4A bis 4C: Kompensationsbewegungen des Fahrerhauses gemäß einem weiteren Ausführungsbeispiel der Erfindung.

Gleiche oder funktional äquivalente Elemente sind in allen Figuren mit denselben Bezugszeichen bezeichnet und werden zum Teil nicht gesondert beschrieben.

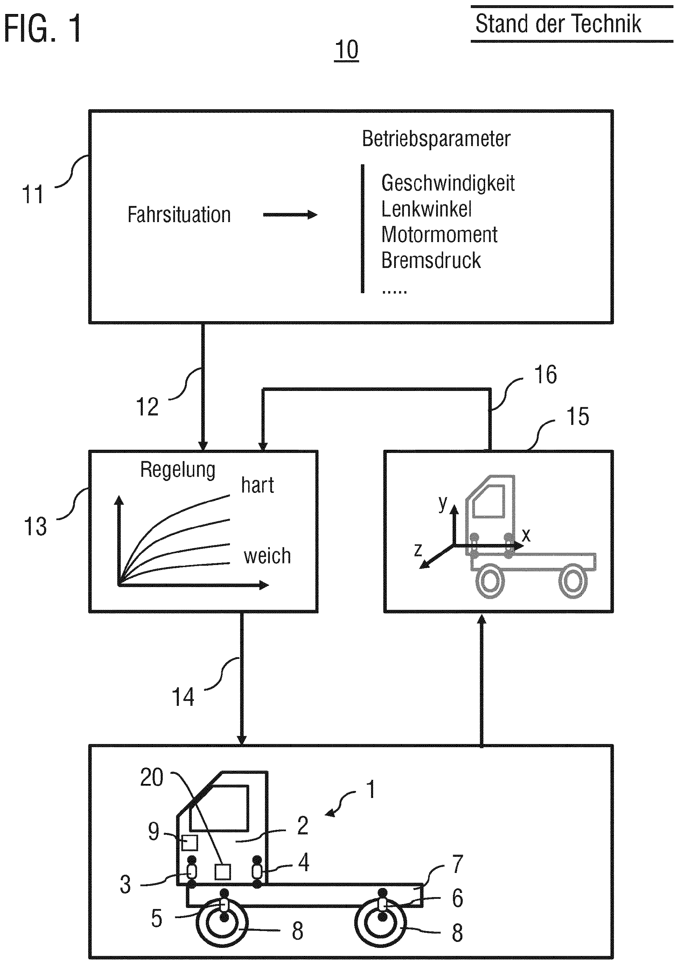

Figur 1 zeigt ein schematisches Ablaufdiagramm 10 zur Illustration eines an sich bekannten Regelverfahrens zur Regelung der Dämpferkraft verstellbarer Dämpfer einer Fahrerhauslagerung eines Nutzfahrzeugs. Figur 1 zeigt im unteren Bild in stark schematisierter Darstellung ein Nutzfahrzeug 1. Der Fahrzeugrahmen 7 ist mittels einer eigenen Lagerung (Fahrwerkslagerung) federnd und dämpfend mit den Fahrzeugrädern 8 verbunden, wobei hier wiederum mehrere Feder-/Dämpferelemente 5, 6 zum Einsatz kommen.

Da bei derartigen Fahrzeugen die Feder- bzw. Dämpferraten der Feder-/Dämpferelemente 5, 6 des Fahrwerks aufgrund erheblicher Fahrzeuggewichte sowie aufgrund der hohen ungefederten Massen im Fahrwerk vergleichsweise hoch gewählt werden müssen, werden Fahrbahnunebenheiten oder auch Schwingungen aus Achsen und Antriebsstrang zunächst noch zu einem erheblichen Teil über die Achsfederung auf den Fahrzeugrahmen 7 übertragen. Aus diesem Grund ist es erforderlich, das Fahrerhaus 2 mittels einer eigenen geeigneten Fahrerhaus-Lagerung nochmals separat vom Fahrzeugchassis 7 zu entkoppeln. Das Fahrerhaus 2 ist daher mittels einer Fahrerhaus-Lagerung auf dem Fahrzeugrahmen 7 gelagert. Die Fahrerhaus-Lagerung umfasst hierzu mehrere verstellbare Feder-/Dämpfeinheiten 3, 4, deren Dämpferkraft mittels einer Steuervorrichtung 20 einstellbar ist. Bei den Feder-/Dämpfereinheiten 3, 4 der Fahrerhaus-Lagerung kann es sich lediglich beispielhaft um druckregelbare Luftfedern handeln.

Das Ablaufdiagramm 10 der Figur 1 illustriert nun eine bekannte Regelung der Fahrerhaus-Dämpfung, die den Zielkonflikt zwischen Komfort und Stabilität löst und die insbesondere für die Fahrt im zweiten Fahrmodus zur Anwendung kommt. Bei aktiver Fahrt soll eine Betriebsstrategie verwirklicht werden, die einen hohen Federungs- und Dämpfungskomfort bereitstellt, gleichzeitig soll das Fahrerhaus bei Lastwechselreaktionen und dynamischen Fahrzuständen (wie z. B. Anfahren, Bremsen, Beschleunigen oder Kurvenfahrt) gut angebunden sein. Ebenso wird eine Nickkompensation bei Anfahr-, Schalt- und Bremsvorgängen realisiert.

Hierzu wird fortlaufend in einem Schritt 11 die momentane Fahrsituation auf Basis verschiedener Betriebsparameter ermittelt. Beispiele für geeignete Betriebsparameter sind die Fahrgeschwindigkeit des Nutzfahrzeugs, der Lenkwinkel, das Motormoment, der Bremsdruck, etc. Diese Betriebsparameter können über die Fahrzeugsensorik ermittelt werden. Aktuelle Werte dieser Betriebsparameter werden in einem Schritt 12 fortlaufend an eine Steuervorrichtung 20 übermittelt, in der verschiedene Regelungskennlinien 13 hinterlegt sind. Die Steuervorrichtung 20 erkennt aus den Betriebsparametern eine bestimmte Fahrsituation und wählt dementsprechend eine der Fahrsituation vorab zugeordnete Kennlinie aus, die dann der Fahrerhauslagerung zu Grunde gelegt wird.

Dabei wird in einem Normalbetrieb des Fahrzeugs das Fahrerhaus 2 auf hohem Komfort geregelt, d. h. es wird eine Kennlinie ausgewählt, die eine möglichst weiche Dämpfung des Fahrerhauses 2 bewirkt. Wird eine Fahrsituation erkannt, die einem hochdynamischen Fahrmanöver entspricht, z. B. Anfahren, Bremsen, Kurvenfahrt, etc., wird dagegen eine härtere Kennlinie gewählt.

In Abhängigkeit von der jeweils aktuell ausgewählten Kennlinie regelt die Steuervorrichtung 20 dann die Dämpferkraft der verstellbaren Dämpfer 3, 4, was durch den Schritt 14 dargestellt ist. Als Teil des Regelkreises werden fortlaufend die Reaktionen des Fahrerhauses 2 überwacht, beispielsweise dessen Bewegung in x-, y- und z-Richtung, was durch den Schritt 15 schematisch dargestellt ist. Diese Abweichungen werden als Regelgröße an die Steuervorrichtung 20 rückgeführt, die dann in Abhängigkeit von dem Wert der Regelgröße entsprechend angepasste Stellgrößen für den Regelkreis ermittelt.

Der Regelkreis ist somit so ausgeführt, dass aus Komfortgründen in der Regel versucht wird, eine möglichst weiche Dämpfung des Fahrerhauses zu realisieren, wobei aber bei dynamischen Vorgängen, wie Spurwechseln, Brems- oder Schaltvorgängen, die Dämpfkraft temporär gesteigert wird.

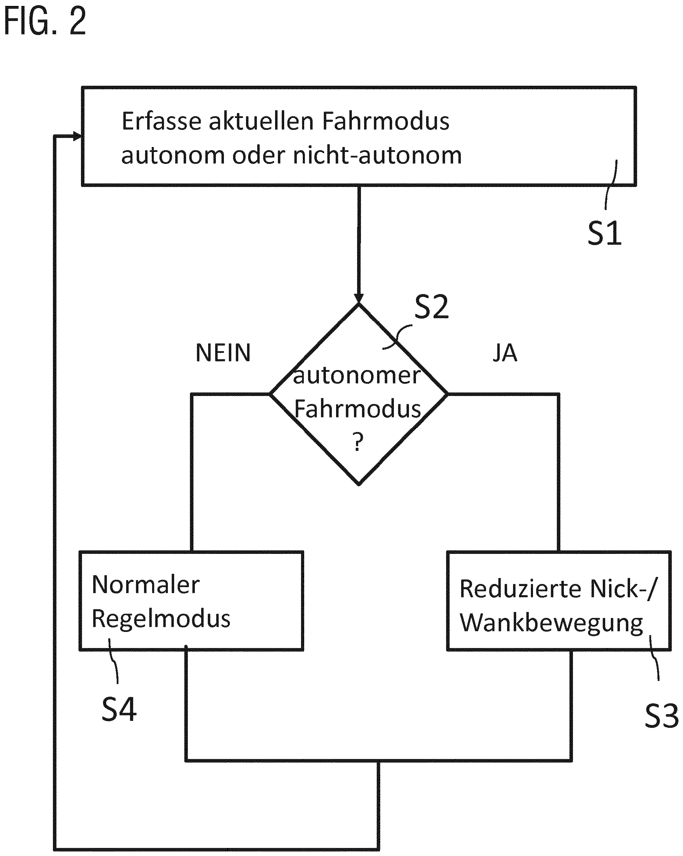

Figur 2 zeigt nun ein schematisches Ablaufdiagramm eines Verfahrens zur Anpassung der Dämpferkraft verstellbarer Dämpfer einer Fahrerhaus-Lagerung eines Kraftfahrzeugs gemäß einer Ausführungsform der Erfindung.

Das Nutzfahrzeug 1 ist hierbei insbesondere in einem autonomen oder teil-autonomen ersten Fahrmodus betreibbar, in welchem das Nutzfahrzeug 1 mithilfe eines Fahrerassistenzsystems 9 selbsttätig sowohl eine Längsführung als auch eine Querführung des Nutzfahrzeuges 1 umfassende Fahrzeugführung durchführt. Das Nutzfahrzeug 1 kann jedoch auch in einem zweiten Fahrmodus durch den Fahrer steuerbar betrieben werden, in welchem ein Fahrer des Nutzfahrzeugs 1 zumindest einen Teil der Fahrzeugführung selbst durchführen soll. Der Fahrer kann also selbst entscheiden, ob er das Nutzfahrzeug wahlweise autonom, z. B. pilotiert, fahren lässt oder ob er es selbst aktiv steuern möchte.

Im (teil-)autonomen Fahrmodus ist keine dauerhafte Überwachung der Fahrzeugführung durch den Fahrer notwendig, so dass dieser sich anderen Tätigkeiten, wie z. B. Lesen oder Arbeiten, widmen kann. Damit der Fahrer diese Nebentätigkeiten mit möglichst geringer Stimulation von außerhalb und möglichst ermüdungsfrei durchführen kann, werden die verstellbaren Dämpfer 3, 4 der Fahrerhauslagerung so angesteuert oder geregelt, dass Nick- und/oder Wankbewegungen im erste Fahrmodus im Vergleich zum zweiten Fahrmodus reduziert werden. Hierzu wird fortlaufend der aktuelle Fahrmodus des Fahrzeugs in einem Schritt S1 überwacht.

Wird hierbei festgestellt (Schritt S2), dass sich das Fahrzeug aktuell nicht im autonomen Fahrmodus befindet, sondern im zweiten Fahrmodus, bei dem der Fahrer das Nutzfahrzeug selbst aktiv steuert, wird in Schritt S4 eine an sich bekannte Regelung der Fahrerhauslagerung durchgeführt, beispielsweise eine Regelung, wie zuvor im Rahmen von Figur 1 beschrieben wurde.

Wird jedoch in Schritt S2 festgestellt, dass das Nutzfahrzeug 1 aktuell in einem (teil-)autonomen Fahrmodus betrieben wird, wird die Regelung oder Steuerung der verstellbaren Dämpfer 3, 4 der Fahrerhaus-Lagerung in Schritt S3 so angepasst, dass die Nick- und/oder Wankbewegungen des Fahrerhauses 2 im Vergleich zum zweiten Fahrmodus reduziert werden. Dadurch wird eine möglichst komfortable Dämpfung der Fahrerhaus-Lagerung umgesetzt, die den Fahrer vom Einfluss der Fahrbewegungen weitgehend abkoppelt. Hierbei können bekannte Ansätze zur Reduzierung von Nick- und/oder Wankbewegungen verwendet werden, wobei im teilautonomen oder autonomen Fahrmodus Nick- und/oder Wankbewegungen jedoch stärker kompensiert bzw. reduziert werden als beim aktiven Fahrmodus. Zur Reduzierung von Nick- und/oder Wankbewegungen kann beispielsweise eine temporär härtere Dämpfereinstellung eingestellt werden. Während der Fahrer im aktiven Fahrmodus auf Lenk-, Brems- oder Beschleunigungswünsche entsprechende Rückmeldungen vom Fahrzeug enthält, die erwartungsgemäß ausfallen und damit zur Fahrsicherheit beitragen, soll der Fahrer im (teil-)autonomen Modus von Fahrzeugbewegungen weitgehend befreit werden, da er das Fahrgeschehen nicht beeinflusst.

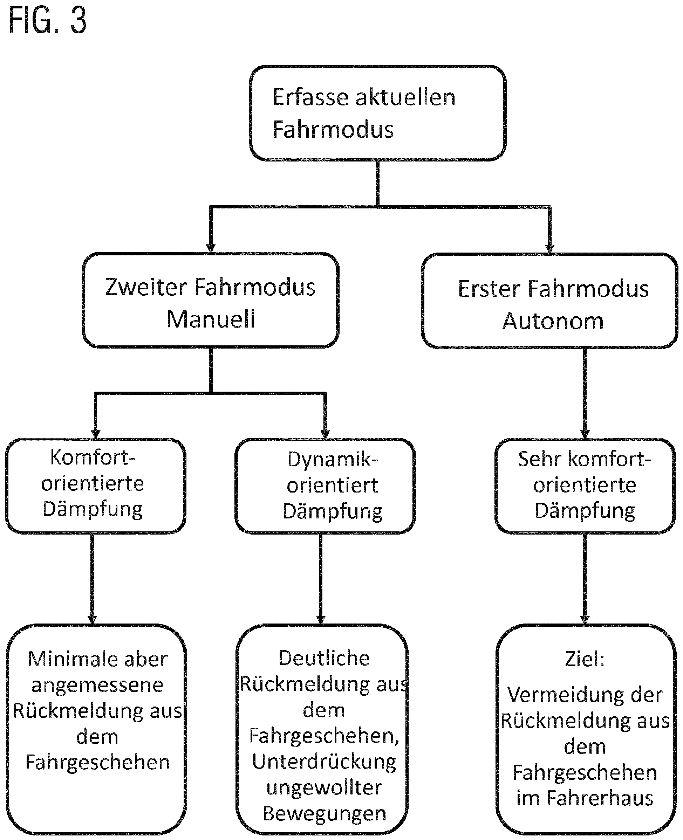

Figur 3 zeigt ein weiteres schematisches Ablaufdiagramm zur Realisierung eines Verfahrens zur Anpassung der Dämpferkraft verstellbarer Dämpfer gemäß einer weiteren Ausführungsform der Erfindung, das das aus Figur 1 an sich bekannte Regelverfahren weiterbildet, für den Fall, dass der Fahrer in den ersten Fahrmodus schaltet, in dem das Fahrzeug (teil-) autonom betrieben wird.

Hierbei wird wiederum zunächst der fortlaufende aktuelle Fahrmodus erfasst, d. h., es wird bestimmt, ob sich das Nutzfahrzeug 1 im ersten Fahrmodus befindet, in dem das Nutzfahrzeug autonom oder zumindest semi-autonom betrieben wird oder ob das Nutzfahrzeug sich im zweiten Fahrmodus befindet, in dem es manuell vom Fahrer gesteuert wird.

Befindet sich das Nutzfahrzeug jedoch im zweiten Fahrmodus, bei dem das Nutzfahrzeug aktiv vom Fahrer gesteuert wird, wird eine Regelung der Fahrerhaus-Lagerung gemäß dem Regelverfahren der Figur 1 durchgeführt. Hierbei wird für normale Fahrzustände möglichst eine komfortorientierte Dämpfung gewählt, um eine minimale, aber zumindest angemessene Rückmeldung des Fahrgeschehens in Fahrerhaus zu ermöglichen. Bei dynamischen Fahrsituationen, wie Spurwechsel, Brems- oder Schaltvorgängen, wird jedoch zu einer dynamikorientierten Dämpfung gewechselt, d. h., hierbei wird temporär die Dämpferkraft gesteigert und eine härtere Dämpferkennlinie ausgewählt, um auf diese Weise eine deutliche Rückmeldung vom Fahrgeschehen ins Fahrerhaus zu geben und gleichzeitig ungewollte Bewegungen zu unterdrücken.

Falls sich das Nutzfahrzeug jedoch im ersten Fahrmodus befindet, wird eine sehr komfortorientierte Dämpfung gewählt, bei der Nick- und Wankbewegungen stärker als im zweiten Fahrmodus reduziert werden, mit dem Ziel, Rückmeldungen aus dem Fahrgeschehen zurück ins Fahrerhaus weitestgehend zu vermeiden.

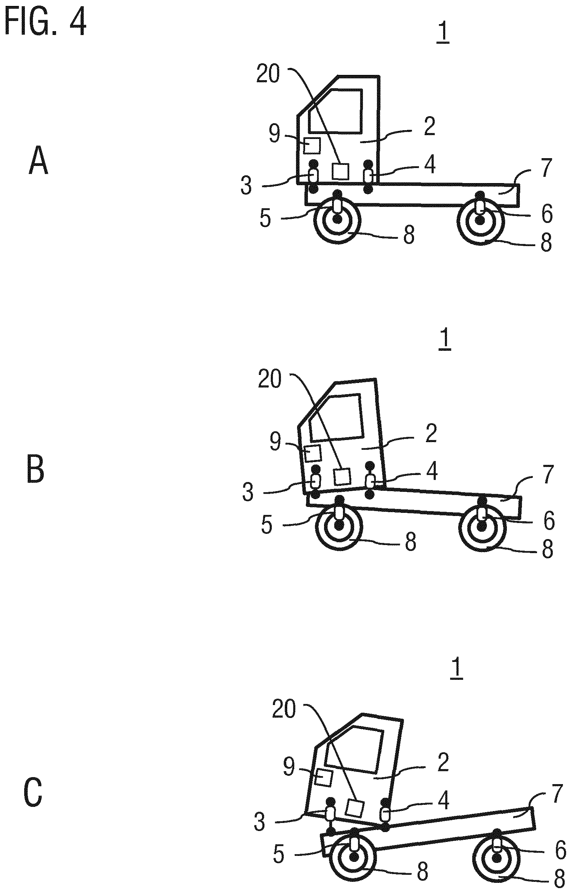

Anhand den Teilfiguren A bis C der Figur 4 wird eine weitere Ausführungsform der Erfindung illustriert. Gemäß dieser Ausführungsform sind die Dämpferelemente 3, 4 der Fahrerhaus-Lagerung als aktive Dämpfer ausgeführt, die je nach Ansteuerung auch eine aktive Nick- oder Kippbewegung des Fahrerhauses 2 erzeugen können.

Figur 4A zeigt einen Zustand des Nutzfahrzeugs 1, in dem sich das Nutzfahrzeug mit gleichmäßiger Geschwindigkeit fortbewegt. Dagegen ist in Figur 4B ein Beschleunigungsvorgang des Nutzfahrzeugs dargestellt und in Figur 4C ein Bremsvorgang des Nutzfahrzeugs.

Wie in Figur 4B dargestellt, neigt sich das Fahrgestell 7 bei einem Beschleunigungsvorgang an der Vorderseite leicht nach oben, während bei einem Bremsvorgang, wie in Figur 4C dargestellt, sich genau der umgekehrte Effekt ergibt, so dass sich die Vorderseite des Fahrgestells 7 nach unten neigt. Die Effekte sind in den Figuren 4B und 4C übertrieben dargestellt.

Die folgenden Ausführungen beziehen sich ausschließlich auf den ersten Fahrmodus, d. h. eine Situation, in dem das Nutzfahrzeug autonom oder zumindest teil-autonom betrieben wird.

Wird im ersten Fahrmodus festgestellt, dass das Nutzfahrzeug 1 eine positive Längsbeschleunigung durchführt, wie in Figur 4B schematisch dargestellt, so wird das Fahrerhaus 2 mittels der aktiven Dämpfer 3, 4 im Vorderbereich aktiv nach unten geneigt z. B. indem die hinteren aktiven Dämpfer ausfahren (und oder die vorderen Dämpfer einfahren). Dies hat den Effekt, dass eine von einem Insassen des Fahrerhauses 2 wahrnehmbare Längsbeschleunigung zum Teil reduziert wird oder vorzugsweise vollständig reduziert wird, so dass der Insasse im Fahrerhaus 2 die Längsbeschleunigung gar nicht wahrnimmt. In analoger Weise wird bei einer Längsverzögerung (negative Längsbeschleunigung) des Nutzfahrzeugs 1, wie in Figur 4C dargestellt, das Fahrerhaus 2 nach hinten geneigt, z. B. indem die vorderen aktiven Dämpfer ausfahren (und oder die hinteren Dämpfer einfahren). Dies hat wiederum den Effekt, dass eine von einem Insassen des Fahrerhauses wahrnehmbare Längsverzögerung reduziert wird. Es wird betont, dass die Kippeffekte in den Figuren 4B und 4C stark übertrieben und nicht maßstabsgetreu dargestellt sind. Beschriebenes System zur Kompensation der Längsbeschleunigungen ist auch mit nur zwei aktiven Dämpfer-Elemente (vorne oder hinten) darstellbar.

Auf die gleiche Weise können auch die Effekte von Querbeschleunigungen kompensiert werden, so dass die Insassen des Fahrerhauses das Auftreten von Querbeschleunigungen des Fahrerhauses nicht wahrnehmen. Hierbei wird das Fahrerhaus je nach Richtung der Querbeschleunigung entweder zur einen oder zur anderen Seite hin geneigt, indem die aktiven Dämpfer nur auf einer Seite des Fahrerhauses entsprechend ein- oder ausgefahren werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können. Folglich soll die Erfindung nicht auf die offenbarten Ausführungsbeispiele begrenzt sein, sondern alle Ausführungsbeispiele umfassen, die in den Bereich der beigefügten Patentansprüche fallen.

### Bezugszeichenliste

- 1: Nutzfahrzeug
- 2: Fahrerhaus
- 3, 4: Verstellbare Dämpfer der Fahrerhaus-Lagerung
- 5, 6: Verstellbare Dämpfer des Fahrwerks
- 7: Fahrzeugrahmen (Chassis)
- 8: Reifen
- 9: Fahrerassistenzsystem zur autonomen Fahrzeugführung
- 10: Ablaufdiagramm
- 11-16: Regelschritte eines Regelverfahrens zur Erfassung der Dämpferkraft einer Fahrerhaus-Lagerung
- 20: Steuervorrichtung

## Patentansprüche

1. Verfahren zur Steuerung oder Regelung einer Fahrerhaus-Lagerung und einer Fahrwerkslagerung eines Kraftfahrzeugs (1), wobei die Fahrerhauslagerung in ihrer Dämpferkraft verstellbare Dämpfer aufweist und die Fahrwerkslagerung einen in ihrer Dämpferkraft verstellbaren Dämpfer aufweist, wobei das Kraftfahrzeug
in einem autonomen oder teil-autonomen ersten Fahrmodus betreibbar ist, in welchem das Kraftfahrzeug mithilfe eines Fahrerassistenzsystems (9) selbsttätig sowohl eine Längsführung als auch eine Querführung des Kraftfahrzeugs umfassende Fahrzeugführung durchführt; und
in einem zweiten Fahrmodus durch den Fahrer steuerbar betreibbar ist, in welchem ein Fahrer des Kraftfahrzeugs (1) zumindest einen Teil der Fahrzeugführung selbst durchführen soll,
wobei, falls das Kraftfahrzeug in dem ersten Fahrmodus betrieben wird, die verstellbaren Dämpfer (3, 4) der Fahrerhaus-Lagerung so angesteuert oder geregelt werden, dass Nick- und/oder Wankbewegungen im Vergleich zum zweiten Fahrmodus reduziert werden; und wobei die Dämpferkraft der verstellbaren Dämpfer (3, 4) der Fahrerhauslagerung nach dem Skyhook-Verfahren geregelt wird, und die Dämpferkraft des verstellbaren Dämpfers (5, 6) der Fahrwerkslagerung des Kraftfahrzeugs nach dem Groundhook-Verfahren geregelt wird.

2. Verfahren nach Anspruch 1, **dadurch gekennzeichnet, dass**, falls das Kraftfahrzeug in dem ersten Fahrmodus betrieben wird, eine bei einer Längsbeschleunigung des Kraftfahrzeugs von einen Insassen des Fahrerhauses (2) wahrnehmbare Längsbeschleunigung zumindest zum Teil dadurch reduziert wird, dass bei einer Längsbeschleunigung des Kraftfahrzeugs das Fahrerhaus (2) mittels der Fahrerhauslagerung nach vorne geneigt wird und bei einer Längsverzögerung nach hinten geneigt wird.

3. Verfahren nach einem der vorhergehenden Ansprüche, **dadurch gekennzeichnet, dass**, falls das Kraftfahrzeug in dem ersten Fahrmodus betrieben wird, eine bei einer Querbeschleunigung des Kraftfahrzeugs von einen Insassen des Fahrerhauses (2) wahrnehmbare Querbeschleunigung zumindest zum Teil dadurch reduziert wird, dass bei einer Querbeschleunigung des Kraftfahrzeugs das Fahrerhaus (2) mittels der Fahrerhauslagerung zur Seite geneigt wird.

4. Verfahren nach einem der vorhergehenden Ansprüche, **dadurch gekennzeichnet, dass**, falls das Kraftfahrzeug in dem ersten Fahrmodus betrieben wird,
a) eine bei einer Bergauffahrt erzeugte Neigung des Fahrerhauses des Kraftfahrzeugs nach hinten zumindest zum Teil dadurch reduziert wird, dass das Fahrerhaus (2) mittels der Fahrerhauslagerung nach vorne geneigt wird; und/oder
b) eine bei einer Bergabfahrt erzeugte Neigung des Kraftfahrzeugs nach vorne zumindest zum Teil dadurch reduziert wird, dass das Fahrerhaus (2) mittels der Fahrerhauslagerung nach hinten geneigt wird.

5. Steuervorrichtung (20) zur Anpassung der Dämpferkraft verstellbarer Dämpfer (3, 4) einer Fahrerhaus-Lagerung eines Kraftfahrzeugs (1) und der Dämpferkraft eines verstellbaren Dämpfers (5,6) einer Fahrwerkslagerung des Kraftfahrzeugs, insbesondere eines Nutzfahrzeugs,
wobei die Steuervorrichtung (20) ausgebildet ist,
a) zu erfassen, ob das Kraftfahrzeug in einem autonomen oder teil-autonomen ersten Fahrmodus betrieben wird, in welchem das Kraftfahrzeug mithilfe eines Fahrerassistenzsystems selbsttätig sowohl eine Längsführung als auch eine Querführung des Kraftfahrzeugs umfassende Fahrzeugführung durchführt oder in einem zweiten Fahrmodus durch den Fahrer steuerbar betrieben wird, oder in einem zweiten Fahrmodus betrieben wird, in welchem ein Fahrer des Kraftfahrzeugs zumindest einen Teil der Fahrzeugführung selbst durchführt, und
b) falls das Kraftfahrzeug in dem ersten Fahrmodus betrieben wird, die verstellbaren Dämpfer der Fahrerhaus-Lagerung so anzusteuern oder zu regeln, dass Nick- und/oder Wankbewegungen im Vergleich zum zweiten Fahrmodus reduziert werden;
und wobei die Dämpferkraft der verstellbaren Dämpfer (3, 4) der Fahrerhauslagerung nach dem Skyhook-Verfahren geregelt wird, und die Dämpferkraft des verstellbaren Dämpfers (5, 6) der Fahrwerkslagerung nach dem Groundhook-Verfahren geregelt wird.

6. Kraftfahrzeug (1), insbesondere Nutzfahrzeug, umfassend ein Fahrerhaus (2), eine verstellbare Dämpfer (3, 4) aufweisende Fahrerhauslagerung, wobei das Kraftfahrzeug (1) in einem autonomen oder teil-autonomen ersten Fahrmodus betreibbar ist, in welchem das Kraftfahrzeug mithilfe eines Fahrerassistenzsystems (9) selbsttätig sowohl eine Längsführung als auch eine Querführung des Kraftfahrzeugs umfassende Fahrzeugführung durchführt; und in einem zweiten Fahrmodus durch den Fahrer steuerbar betreibbar ist, in welchem ein Fahrer des Kraftfahrzeugs zumindest einen Teil der Fahrzeugführung selbst durchführen soll, wobei das Kraftfahrzeug eine Steuervorrichtung (20) nach Anspruch 5 aufweist.

## Claims

1. Method for performing open-loop or closed-loop control of a driver's cab mount and of a chassis mount of a motor vehicle (1), wherein the driver's cab mount has dampers whose damper force can be adjusted and the chassis mount has dampers whose damper force can be adjusted, wherein the motor vehicle
can be operated in an autonomous or partially autonomous first driving mode in which the motor vehicle automatically carries out, by means of a driver assistance system (9), vehicle guidance comprising both a longitudinal guidance operation and a transverse guidance operation of the motor vehicle; and
in a second driving mode said motor vehicle can be operated in such a way that it can be controlled by the driver, in which driving mode a driver of the motor vehicle (1) is intended to carry out at least part of the vehicle guidance himself,
wherein if the motor vehicle is operated in the first driving mode, the adjustable dampers (3, 4) of the driver's cab mount are actuated or adjusted in such a way that pitching and/or rolling movements are reduced compared to the second driving mode, and wherein the damper force of the adjustable dampers (3, 4) of the driver's cab mount is adjusted according to the Skyhook method, and
the damper force of the adjustable damper (5, 6) of the chassis mount of the motor vehicle is adjusted according to the groundhook method.

2. Method according to Claim 1, **characterized in that** if the motor vehicle is operated in the first driving mode a longitudinal acceleration which can be perceived by an occupant of the driver's cab (2) in the case of longitudinal acceleration of the motor vehicle is at least partially reduced by virtue of the fact that in the case of longitudinal acceleration of the motor vehicle the driver's cab (2) is inclined forward by means of the driver's cab mount and is inclined rearward in the case of longitudinal deceleration.

3. Method according to one of the preceding claims, **characterized in that** if the motor vehicle is operated in the first driving mode, transverse acceleration which can be perceived by an occupant of the driver's cab (2) in the case of transverse acceleration of the motor vehicle is at least partially reduced by virtue of the fact that in the case of transverse acceleration of the motor vehicle the driver's cab (2) is inclined to the side by means of the driver's cab mount.

4. Method according to one of the preceding claims, **characterized in that** if the motor vehicle is operated in the first driving mode,
a) an inclination of the driver's cab of the motor vehicle to the rear, which is generated in the case of uphill travel, is at least partially reduced by virtue of the fact that the driver's cab (2) is inclined forward by means of the driver's cab mount; and/or
b) a forward inclination of the motor vehicle, which is generated in the case of downhill travel, is at least partially reduced by virtue of the fact that the driver's cab (2) is inclined rearward by means of the driver's cab mount.

5. Control device (20) for adapting the damper force of adjustable dampers (3, 4) of a driver's cab mount of a motor vehicle (1) and the damper force of an adjustable damper (5,6) of a chassis mount of the motor vehicle, in particular of a utility vehicle, wherein the control device (20) is designed
a) to detect whether the motor vehicle is being operated in an autonomous or partially autonomous first driving mode in which the motor vehicle automatically carries out, by means of a driver assistance system, vehicle guidance comprising both a longitudinal guidance operation and a transverse guidance operation of the motor vehicle, or is being operated in a second driving mode in such a way that it can be controlled by the driver, or is being operated in a second driving mode in which a driver of the motor vehicle carries out at least part of the vehicle guidance himself, and
b) if the motor vehicle is being operated in the first driving mode, to actuate or adjust the adjustable dampers of the driver's cab mount in such a way that pitching and/or rolling movements are reduced compared to the second driving mode,
and wherein the damper force of the adjustable dampers (3,4) of the driver's cab mount is adjusted according to the skyhook method, and the damper force of the adjustable damper (5,6) of the chassis mount is adjusted according to the groundhook method.

6. Motor vehicle (1), in particular utility vehicle, comprising a driver's cab (2), a driver's cab mount having adjustable dampers (3, 4), wherein the motor vehicle (1) can be operated in an autonomous or partially autonomous first driving mode in which the motor vehicle automatically carries out, by means of a driver assistance system (9), vehicle guidance comprising both a longitudinal guidance operation and a transverse guidance operation of the motor vehicle; and in a second driving mode can be operated in such a way that it can be controlled by the driver, in which driving mode a driver of the motor vehicle is intended to carry out at least part of the vehicle guidance himself, wherein the motor vehicle has a control device (20) according to Claim 5.

## Revendications

1. Procédé de commande ou de régulation d'une suspension de cabine de conducteur et d'une suspension de châssis d'un véhicule automobile (1), la suspension de cabine de conducteur possédant des amortisseurs dont la force d'amortissement est réglable et la suspension de châssis possédant un amortisseur dont la force d'amortissement est réglable, le véhicule automobile pouvant être utilisé dans un premier mode de déplacement autonome ou semi-autonome, dans lequel le véhicule automobile, à l'aide d'un système d'assistance au conducteur (9), exécute de manière autonome une conduite du véhicule comprenant à la fois un guidage longitudinal et un guidage transversal du véhicule automobile ; et pouvant être utilisé dans un deuxième mode de déplacement commandable par le conducteur, dans lequel un conducteur du véhicule automobile (1) doit exécuter lui-même au moins une partie de la conduite du véhicule,
dans le cas où le véhicule automobile est utilisé dans le premier mode de déplacement, les amortisseurs réglables (3, 4) de la suspension de cabine de conducteur étant commandés ou régulés de telle sorte que les mouvements de tangage et/ou de roulis sont réduits en comparaison du deuxième mode de déplacement ; et la force d'amortissement des amortisseurs réglables (3, 4) de la suspension de cabine de conducteur étant régulée selon le procédé dit Skyhook et la force d'amortissement de l'amortisseur réglable (5, 6) de la suspension de châssis du véhicule automobile étant régulée selon le procédé dit Groundhook.

2. Procédé selon la revendication 1, **caractérisé en ce que** dans le cas où le véhicule automobile est utilisé dans le premier mode de déplacement, une accélération longitudinale perceptible par un occupant de la cabine de conducteur (2) lors d'une accélération longitudinale du véhicule automobile est au moins partiellement réduite par le fait que lors d'une accélération longitudinale du véhicule automobile, la cabine de conducteur (2) est inclinée vers l'avant au moyen de la suspension de cabine de conducteur et inclinée vers l'arrière dans le cas d'un ralentissement longitudinal.

3. Procédé selon l'une des revendications précédentes, **caractérisé en ce que** dans le cas où le véhicule automobile est utilisé dans le premier mode de déplacement, une accélération transversale perceptible par un occupant de la cabine de conducteur (2) lors d'une accélération transversale du véhicule automobile est au moins partiellement réduite par le fait que lors d'une accélération transversale du véhicule automobile, la cabine de conducteur (2) est inclinée vers le côté au moyen de la suspension de cabine de conducteur.

4. Procédé selon l'une des revendications précédentes, **caractérisé en ce que** dans le cas où le véhicule automobile est utilisé dans le premier mode de déplacement,
a) une inclinaison vers l'arrière de la cabine de conducteur du véhicule automobile produite lors d'une montée est au moins partiellement réduite par le fait que la cabine de conducteur (2) est inclinée vers l'avant au moyen de la suspension de cabine de conducteur ; et/ou
b) une inclinaison vers l'avant du véhicule automobile produite lors d'une descente est au moins partiellement réduite par le fait que la cabine de conducteur (2) est inclinée vers l'arrière au moyen de la suspension de cabine de conducteur.

5. Dispositif de commande (20) destiné à adapter la force d'amortissement d'amortisseurs réglables (3, 4) d'une suspension de cabine de conducteur d'un véhicule automobile (1) et la force d'amortissement d'un amortisseur réglable (5, 6) d'une suspension de châssis du véhicule automobile, notamment d'un véhicule utilitaire,
le dispositif de commande (20) étant configuré
a) pour détecter si le véhicule automobile est utilisé dans un premier mode de déplacement autonome ou semi-autonome, dans lequel le véhicule automobile, à l'aide d'un système d'assistance au conducteur, exécute de manière autonome une conduite du véhicule comprenant à la fois un guidage longitudinal et un guidage transversal du véhicule automobile ou s'il est utilisé dans un deuxième mode de déplacement commandable par le conducteur, ou s'il est utilisé dans un deuxième mode de déplacement dans lequel un conducteur du véhicule automobile exécute lui-même au moins une partie de la conduite du véhicule, et
b) dans le cas où le véhicule automobile est utilisé dans le premier mode de déplacement, pour commander ou réguler les amortisseurs réglables de la suspension de cabine de conducteur de telle sorte que les mouvements de tangage et/ou de roulis sont réduits en comparaison du deuxième mode de déplacement ; et la force d'amortissement des amortisseurs réglables (3, 4) de la suspension de cabine de conducteur étant régulée selon le procédé dit Skyhook et la force d'amortissement de l'amortisseur réglable (5, 6) de la suspension de châssis étant régulée selon le procédé dit Groundhook.

6. Véhicule automobile (1), notamment véhicule utilitaire, comprenant une cabine de conducteur (2), une suspension de cabine de conducteur qui possède des amortisseurs réglables (3, 4), le véhicule automobile (1) pouvant être utilisé dans un premier mode de déplacement autonome ou semi-autonome, dans lequel le véhicule automobile, à l'aide d'un système d'assistance au conducteur (9), exécute de manière autonome une conduite du véhicule comprenant à la fois un guidage longitudinal et un guidage transversal du véhicule automobile ; et peut être utilisé dans un deuxième mode de déplacement commandable par le conducteur, dans lequel un conducteur du véhicule automobile exécute lui-même au moins une partie de la conduite du véhicule, le véhicule automobile possédant un dispositif de commande (20) selon la revendication 5.
